# EUROPEAN PATENT SPECIFICATION

(11) **EP 0 333 934 B1**
(45) Date of publication and mention of the grant of the patent: **24.02.1993**
(21) Application number: 88200561.4
(22) Date of filing: 25.03.1988
(51) Int. Cl.: B05D 7/14, E04F 21/165, B05C 17/10, B29C 67/16

(54) **Method and device for surface treatment**
Verfahren und Vorrichtung zur Behandlung einer Oberfläche
Méthode et dispositif pour le traitement d'une surface

(43) Date of publication of application: 27.09.1989
(73) Proprietor: Maeda Kiko Company Limited, Kita-ku Osaka (JP)
(72) Inventor: Hirahara, Yasuzi, Ito-gun Wakayama-ken (JP)
(74) Representative: Smulders, Theodorus A.H.J., Ir.

(56) References cited:
- DE-A- 3 609 961
- US-A- 4 631 019

## Description

This invention relates to a method and device for surface treatment of an automobile body or the like which requires surface repairing.

Hitherto, when repairing an automobile body having on its surface a depression caused in an accident or otherwise, it has been a common practice to apply to the depressed surface a rough coat of putty heaping full, then heat the so applied putty inwardly from the surface thereof to dry. After dried, the rough coat of putty is sanded to the extent that a recess is formed therein, and an intermediate coat of putty is applied heaping full to the so formed recess. The intermediate coat of putty is heated inwardly from the surface thereof to dry, and thereafter it is sanded until a recess is formed in its surface. Nextly, a finish coat of putty is applied heaping full to the so formed recess of the intermediate coat of putty and then the finish coat of putty is heated inwardly from the surface thereof to dry. After having been dried, the surface of the finish coat of the putty is polished so that it may present a smooth planar or curved surface continued to the peripheral surface of the repaired spot. Surface treating operation for the repair of such depressed surface involves considerable labor and time.

In such prior art, each coat of putty is dried inwardly from its surface, and generally it is likely that before the rough coat of putty is allowed to dry completely, the finished coat and/or intermediate coat of putty will become dried and thus the surface thereof will become hardened. Therefore, if the rough coat of putty is insufficiently dried, the lowermost portion of the rough coat may remain undried. In order to overcome this difficulty, it is necessary to carry out moderate heating inwardly from the surface of the finish coat of putty to allow thorough drying over a long period of time, which means poor working efficiency.

With a view to solving the foregoing problems, it is an object of this invention to provide an improved method and device for surface treatment.

It is another object of the invention to provide a method and device for surface treatment which can eliminate aforesaid difficulties and which requires less labor and less time to complete the required surface treating operation.

In accomplishing these objects, a method for surface treating according to the invention comprises applying a coat of putty in soft condition on a surface area of an object to be surface treated on which a depression is present, moving a putty device having an arcuate contact portion over the surface of the coat of putty to form a shallow recess therein, repeating said series of operation a single time or a pluraliry of times, applying a coat of putty to each recess thereby obtained, shaping to order the surface of applied coat of putty by using said putty device, and heating a surface opposite to the putty coated surface so as to allow the putty to become dried.

Further in accomplishing the above objects, in a device for surface treatment comprising a shaping member formed of a highly resilient material and means for displacing both ends of the shaping member toward and away from each other, as known per se from US-A 4,631,019, wherein the shaping member is an applicator as well and is bendable to a convex or concave shape approximately matching the curvature of the surface being repaired, said shaping member according to the present invention is characterized by having a longitudinally extending contact portion, said displacing means being designed for displacing both ends of said longitudinally extending contact portion toward and away from each other.

In a preferred embodiment, the coat of putty is shaped to order in such manner that the surface of the putty has almost the same curvature radius as the contact portion of the putty device.

In another preferred embodiment, the shaping member is formed with the contact surface having an angle of 20° to 45° relative to the widthwise direction of the shaping member.

In a still further preferred embodiment, the shaping member is provided with the flexible thin plate in parallel to the contact portion, the widthwise direction of which plate is perpendicular to the longitudinal direction of the shaping member.

According to the invention, a coat of putty in soft condition is applied to a depressed surface area and, while the coat is still in soft condition, the putty device having an arcuate contact portion is moved over the surface of the coat of putty while being kept in contact therewith, a recess being thereby formed on the coat surface. This series of operation is repeated a single time or a plurality of times, and then a coat of putty in soft condition is applied to the recess, the coat surface being shaped in order by said putty device while the putty is still in soft condition. While a surface opposite to the putty coated surface of the object being surface treated is heated to allow the putty to become dried. Subsequently, the coated surface consisting of a plurality of putty layers is polished. Therefore, as compared with the case with aforesaid prior art method, surface treating operation can be carried out in an exceedingly simplified manner and in much shorter time.

As above mentioned, according to the invention, a plurality of coats of putty in soft condition are applied on a depressed surface of the object to be surface treated and a surface opposite to the putty coated surface is heated to dry the putty, whereby the moisture present in the coats of putty is allowed to migrate outwardly so that the putty becomes dried gradually beginning from the interior side. Therefore, however thick the layers of putty may be, they can be completely dried and the rough coat of putty is allowed to go into strong bond with the surface of the object being surface treated. Furthermore, since all the coats of putty are dried in one operation, the process of surface treatment can be completed in short time.

These and other objects and advantages of the invention will become more apparent upon a reading of the following detailed specification and drawing, in which:
Fig. 1 is a sectional view showing, step by step, the process of surface treatment according to the invention;
Fig. 2 is a front view showing a putty device 9 of the invention;
Fig. 3 is an exploded view in perspective of the putty device 9;
Fig. 4 is an enlarged sectional view of a contact portion 11 and adjacent portions of the putty device as they appear during the process of putty coat shaping; and
Fig. 5 is a view illustrating another method for preventing a shaping member 10 from being bent.

One preferred embodiment of the invention will now be described with reference to the accompanying drawings.

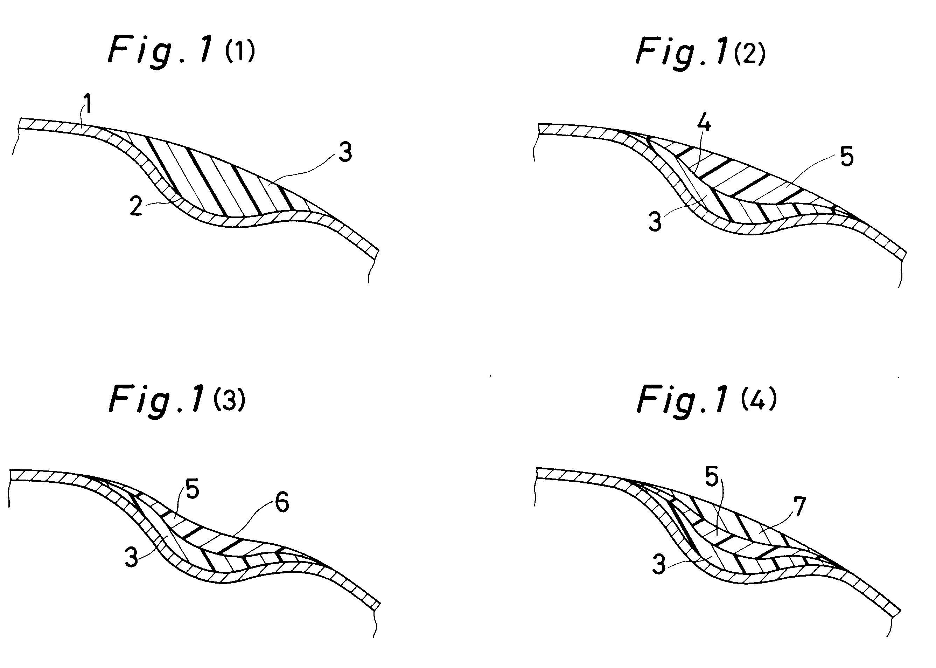

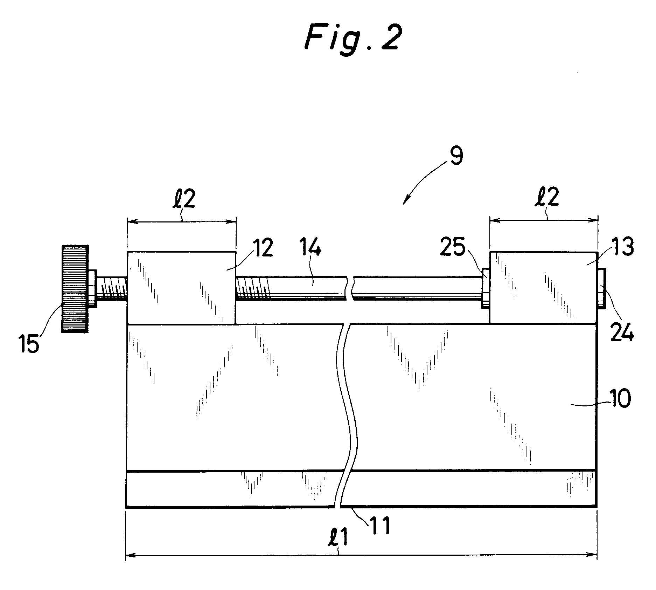

Fig. 1 is a sectional view sequentially showing the steps of operation in the surface treating method according to the invention. As Fig. 1(1) shows, the surface of a depressed surface 2 of a metal plate 1 is roughened in order to enhance the strength of the bond between a coat of putty and the surface and a rough coat of putty 3 having high viscosity and good adhesivity is applied heaping full on the surface. Then, as Fig. 1(2) shows, a recess 4 is formed by using a putty device 9 shown in Fig. 2 in such manner as will be described hereinafter, and an intermediate coat of putty 5 having a lower degree of viscosity than the rough coat of putty 3 is applied heaping full. Nextly, as Fig. 1(3) shows, a recess 6 which is less deep than the recess 4 is formed by using the putty device 9. Finally, as Fig. 1(4) shows, a finish coat of putty 7 is applied by means of, for example, a spray gun, and heating is effected using such source of heat as far infrared rays from a surface opposite to that surface of the metal plate 1 to which the rough coat of putty 3 is applied, to dry the coats of putty 3, 5, 7. After the coats have thus been dried, the coated surface is polished to the desired finish effect.

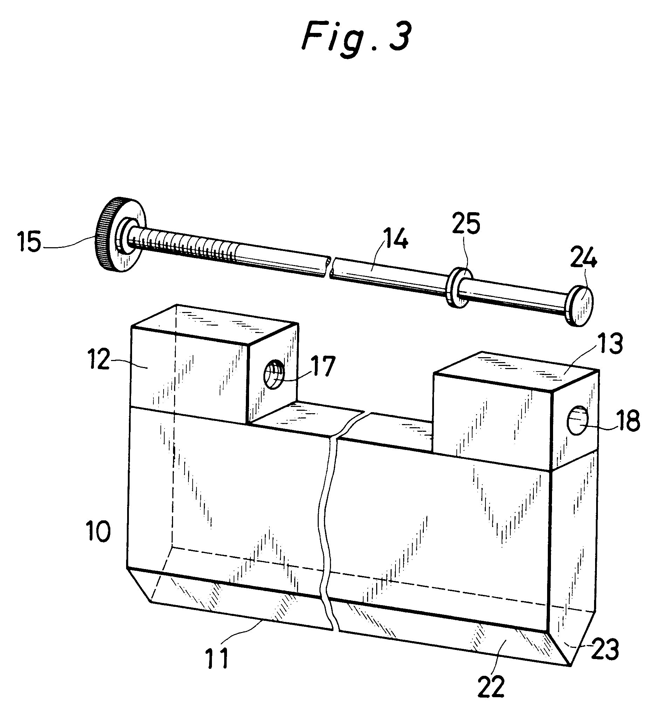

Fig. 2 is a front view of the putty device 9 of the invention; and Fig. 3 is an exploded perspective view thereof. The putty device 9 comprises a shaping member 10 formed of a highly resilient material, such as hard rubber or a synthetic resin, and having brackets 12, 13 fixed thereto, with a control rod 14 mounted in the brackets 12, 13. The curvature radius of a contact portion 11 is varied by displacing the brackets 12 and 13 relative to each other through rotation of the control rod 14. That end of the shaping member 10 which is opposite to the brackets 12, 13 is tapered to form a wedge shape as it extends away from the brackets 12, 13, and it has contact surfaces 22, 23. The contact surfaces 22, 23 intersect at 11 over the entire longitudinal length of the shaping member 10 to form a contact portion.

The length ℓ1 of the shaping member 10 is greater than the length of said depressed surface 2 to be surface treated, and the length ℓ2 of each of the brackets 12, 13 is long enough to prevent the shaping member 10 from being bent in the widthwise direction when the control rod 14 is rotated. The bracket 12 has a threaded hole 17, while the bracket 13 has a mounting hole 18. A flange 24 is fixed to one end of the control rod 14, and a flange 25 is fixed in position in slightly more spaced apart relation from the flange 24 than the length ℓ2 of the bracket 13, whereby the control rod 14 is fitted in the mounting hole 18 of the bracket 13 so as not to move in the axial direction of the rod 14. A knob 15 is fixed to the other end of the control rod 14 on which there is formed an external thread which is in engagement with the threaded hole 17 of the bracket 12.

When using the putty device 9, the contact portion 11 is first brought in contact with an undepressed surface of the metal plate 1 at a position adjacent the depressed surface 2 so that the both are brought in agreement in curvature radius. Then, the knob 15 is turned so as to project the contact portion 11 substantially for treating the rough coat of putty 3 in manner as earlier described. Then, the knob 15 is turned reverse to increase the curvature radius of the contact portion 11 and the intermediate coat of putty 5 is treated as above described. By so rotating the knob 15 it is possible to select any desired curvature radius of the contact portion 11.

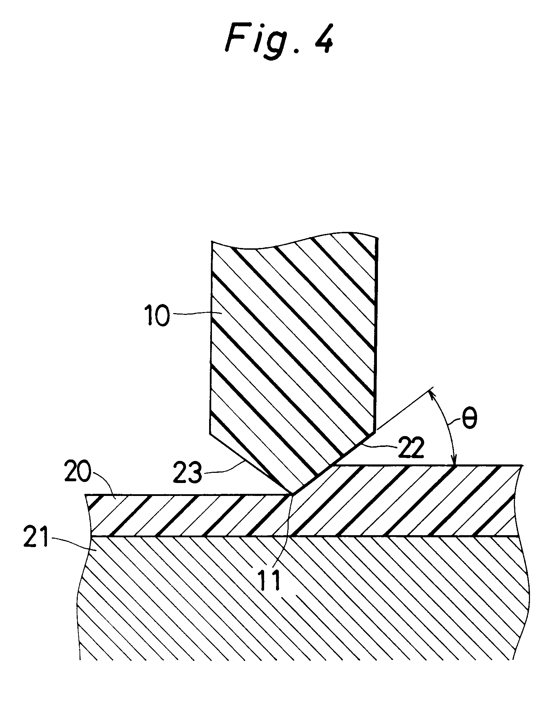

Fig. 4 is an enlarged sectional view of the contact surface 11 and adjacent portions of the putty device 9 as they appear when the coats of putty 3, 5, 7 are being shaped. Generally, when shaping the putty surface with a thin plate, if the thin plate is moved over the putty surface in perpendicularly slide contact therewith, the surface is roughened, whereas if the thin plate is moved in slide contact while being tilted in the direction of its movement, a smooth finished surface is obtained. In order to give such varied finish effect, it is so arranged that the contact surfaces 22, 23 of the shaping member 10 have an angle ϑ of 20 to 45° relative to the widthwise direction of the shaping member 10.

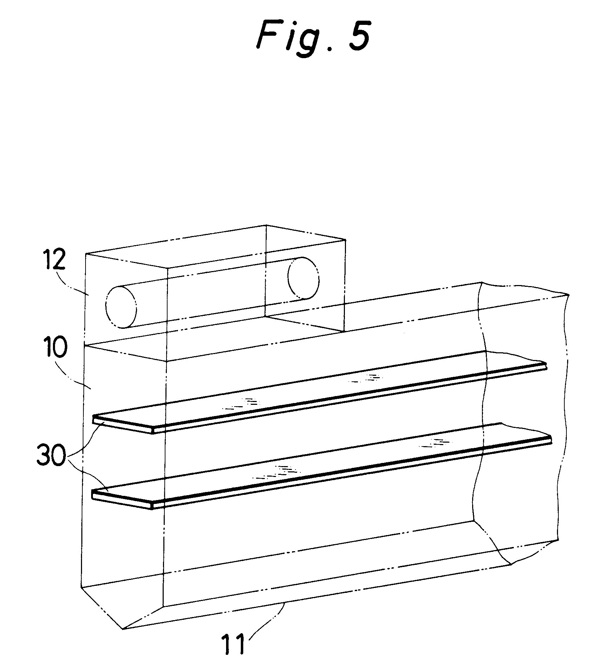

Fig. 5 shows another arrangement intended to prevent the shaping member 10 from being bent in the widthwise direction thereof. One or two flexible thin plates 30 are implanted in the shaping member 10 in such manner that they are parallel to the contact portion 11 and to each other and that in the widthwise direction thereof they are perpendicular to the longitudinal direction of the shaping member 10, whereby the shaping member 10 can be completely prevented from being bent in the widthwise direction thereof.

Such arrangement that one end of the control rod 14 is fitted in the bracket 13 having a mounting hole 18 so as to prevent the control rod 14 from moving in the axial direction thereof, and other features of the invention are not limited to those described with reference to the above shown embodiment.

## Claims

1. A method for surface treating which comprises applying a coat of putty (3) in soft condition on a surface area of an object (1) to be surface treated on which a depression (2) is present, moving a putty device (9) having an arcuate contact portion (11) over the surface of the coat of putty (3) to form a shallow recess (4) therein, repeating said series of operation a single time or a pluraliry of times, applying a coat of putty (7) to each recess (6) thereby obtained, shaping to order the surface of applied coat of putty by using said putty device (9), and heating a surface opposite to the putty coated surface so as to allow the putty (3, 5, 7) to become dried.

2. A device for surface treatment comprising a shaping member (10) formed of a highly resilient material and means (12, 13, 14, 15, 17, 18, 24, 25) for displacing both ends of the shaping member (10) toward and away from each other, characterized by said shaping member (10) having a longitudinally extending contact portion (11), said displacing means (12, 13, 14, 15, 17, 18, 24, 25) being designed for displacing both ends of said longitudinally extending contact portion (11) toward and away from each other.

3. The method for surface treatment as claimd in claim 1, wherein the coat of putty (3, 5, 7) is so shaped to order that surface (4, 6) of the putty has almost the same curvature radius as the contact portion (11) of the putty device (9).

4. The device for surface treatment as claimed in claim 2, wherein the shaping member (10) is formed with the contact surface (22, 23) having an angle of 20 to 45° relative to the widthwise direction of the shaping member (10).

5. The device for surface treatment as claimed in claim 4, wherein the shaping member (10) is provided with the flexible thin plate (30) in parallel to the contact portion (11), the widthwise direction of which plate (30) is perpendicular to the longitudinal direction of the shaping member (10).

## Patentansprüche

1. Verfahren zur Behandlung einer Oberfläche, bei welchem eine Schicht Spachtelkitt (3) in weichem Zustand auf einen Oberflächenbereich eines oberflächenzubehandelnden Gegenstandes (1) aufgebracht wird, der eine Eindellung (2) aufweist, eine Spachtelkitteinrichtung (9) mit einem gewölbten Berührungsteil bzw. -abschnitt (11) über die Oberfläche der Spachtelkittschicht (3) bewegt wird, um in dieser eine flache Vertiefung (4) auszubilden, diese Arbeitsgänge ein- oder mehrmals wiederholt werden, eine Spachtelkittschicht (7) auf die jeweilige auf diese Weise erhaltene Vertiefung (6) aufgetragen wird, ein Verstreichen bzw. eine Formung der Oberfläche der aufgebrachtem Spachtelkittschicht mittels der Spachtelkitteinrichtung (9) erfolgt, und bei welchem eine der Oberfläche mit der Spachtelkittschicht gegenüberliegende Oberfläche erwärmt wird, um den Spachtelkitt (3, 5,7) zu trocknen.

2. Vorrichtung zur Behandlung einer Oberfläche, umfassend eine Formungseinrichtung (10) aus einem hochelastischen Material sowie Mittel (12, 13, 14, 15, 17, 18, 24, 25) zum Bewegen bzw. Verschieben der beiden Enden der Formungseinrichtung (10) aufeinander zu und voneinander fort, dadurch gekennzeichnet, daß die Formungseinrichtung (10) einen sich in Längsrichtung erstreckenden Berührungsteil bzw. -abschnitt (11) aufweist, wobei die Verschiebemittel (12, 13, 14, 15, 17, 18, 24, 25) so ausgelegt sind, daß sie die beiden Enden des sich in Längsrichtung erstreckenden Berührungsteils (11) aufeinander zu und voneinander fort bewegen.

3. Verfahren zur Behandlung einer Oberfläche nach Anspruch 1, bei welchem die Spachtelkittschicht (3, 5, 7) so verstrichen bzw. geformt wird, daß die Oberfläche (4, 6) der Spachtelkittschicht fast den gleichen Krümmungsradius aufweist wie der Berührungsteil (11) der Spachtelkitteinrichtung (9).

4. Vorrichtung zur Behandlung einer Oberfläche nach Anspruch 2, bei welcher die Formungseinrichtung (10) mit einer Berührungsfläche (22, 23) ausgebildet ist, die zur Breitenrichtung der Formungseinrichtung (10) einen Winkel von 20 bis 45° bildet.

5. Vorrichtung zur Behandlung einer Oberfläche nach Anspruch 4, bei welcher die Formungseinrichtung (10) mit einer flexiblen dünnen Platte (30) parallel zum Berührungsteil (11) versehen ist und die Breitenrichtung der Platte (30) senkrecht zur Längsrichtung der Formungseinrichtung (10) verläuft.

## Revendications

1. Procédé de traitement de surface qui comprend l'application d'une couche de mastic (3) à l'état mou sur une zone de surface d'un objet (1) à traiter en surface qui présente un enfoncement (2), le déplacement d'un dispositif à mastiquer (9) ayant une partie de contact arquée (11) sur la surface de la couche de mastic (3) pour former un creux peu profond (4) dans cette dernière, la répétition de cette série d'opérations une ou plusieurs fois, l'application d'une couche de mastic (7) dans chaque creux (6) ainsi obtenu, le façonnage à la demande au moyen du dispositif à mastiquer (9) de la surface de la couche de mastic appliquée, et le chauffage d'une surface opposée à la surface revêtue de mastic afin de faire sécher le mastic (3, 5, 7).

2. Dispositif de traitement de surface comprenant un élément de façonnage (10) fait d'une matière à haute résilience et des moyens (12, 13, 14, 15, 17, 18, 24, 25) pour rapprocher et écarter les deux extrémités de cet élément de façonnage (10), caractérisé par le fait que l'élément de façonnage (10) a une partie de contact s'étendant longitudinalement (11) et lesdits moyens (12, 13, 14, 15, 17, 18, 24, 25) sont conçus pour rapprocher et écarter les deux extrémités de cette partie de contact s'étendant longitudinalement (11).

3. Procédé de traitement de surface selon la revendication 1, dans lequel la couche de mastic (3, 5, 7) est façonnée à la demande de façon que la surface (4, 6) du mastic ait à peu près le même rayon de courbure que la partie de contact (11) du dispositif à mastiquer (9).

4. Dispositif de traitement de surface selon la revendication 2, sur lequel les surfaces de contact (22, 23) de l'élément de façonnage (10) font un angle de 20 à 45 degrés avec la direction en largeur de celui-ci.

5. Dispositif de traitement de surface selon la revendication 4, dans lequel l'élément de façonnage (10) et pourvu d'une plaque mince flexible (30) parallèle à la partie de contact (11), la direction en largeur de cette plaque (30) étant perpendiculaire à la direction longitudinale de l'élément de façonnage (10).
